(19) Europäisches Patentamt
European Patent Office
Office européen des brevets

(11) **EP 4 614 183 A1**

(12) **EUROPEAN PATENT APPLICATION**
published in accordance with Art. 153(4) EPC

(43) Date of publication:
**10.09.2025 Bulletin 2025/37**

(21) Application number: **23885835.1**

(22) Date of filing: **01.11.2023**

(51) International Patent Classification (IPC):
**G01S 7/35** (2006.01)   **G01S 13/86** (2006.01)
**G01S 13/89** (2006.01)   **G01V 3/12** (2006.01)

(52) Cooperative Patent Classification (CPC):
**G01S 7/35; G01S 13/86; G01S 13/89; G01V 3/12**

(86) International application number:
**PCT/JP2023/039509**

(87) International publication number:
**WO 2024/096081 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 JP 2022176663**

(71) Applicant: **Kyocera Corporation**
**Kyoto-shi, Kyoto 612-8501 (JP)**

(72) Inventors:
• **KASHIMA Yuu**
  **Kyoto-shi, Kyoto 612-8501 (JP)**
• **SAHARA Tooru**
  **Kyoto-shi, Kyoto 612-8501 (JP)**
• **KURODA Jun**
  **Kyoto-shi, Kyoto 612-8501 (JP)**
• **HOMMA Takuya**
  **Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **ELECTRONIC APPARATUS, METHOD FOR CONTROLLING ELECTRONIC APPARATUS, AND PROGRAM**

(57)   An electronic device includes a controller configured to detect an object based on a transmission signal transmitted as a transmission wave and a reception signal received as a reflection wave generated by the transmission wave being reflected by the object. The controller adjusts a signal strength of the reception signal in accordance with a directivity of at least one of the transmission wave or the reflection wave.

FIG. 1

**Description**

CROSS-REFERENCE TO RELATED APPLICATIONS

This application claims priority of Japanese Patent Application No. 2022-176663 filed in Japan on November 2, 2022, the entire disclosure of which is hereby incorporated by reference.

TECHNICAL FIELD

The present disclosure relates to an electronic device, a method for controlling an electronic device, and a program.

BACKGROUND OF INVENTION

In fields such as industries related to automobiles, for example, technologies for measuring the distance between a host vehicle and a prescribed object are becoming increasingly important. In particular, in recent years, various studies have been conducted on radar (radio detecting and ranging) technologies. In these technologies, the distance to an object is measured by transmitting radio waves, such as millimeter waves, and receiving reflection waves reflected from an object, such as an obstacle. The importance of such technologies for measuring distances and so forth is expected to further increase in the future with the development of technologies for assisting drivers in driving and technologies related to automated driving that allow part or all of the driving process to be automated. Such a technology for measuring the distance between objects is expected to be used in various fields, not limited to fields such as transportation. For example, if the position of a monitored person such as a person requiring nursing care or a person requiring care can be detected in a nursing home or a medical setting, this can be useful for tracking or monitoring the behavior of the monitored person.

However, a sensor that detects an object by transmitting and receiving radio waves may have a detection strength that varies depending on the distance to the object to be detected. For example, Patent Literature 1 discloses a technique in which the detection strength is expressed as a heat map by quantifying the detection strength in accordance with the distance from multiple distance measurement sensors (ToF (time of flight) sensors).

CITATION LIST

PATENT LITERATURE

Patent Literature 1: Japanese Unexamined Patent Application Publication No. 2022-19047

SUMMARY

In an embodiment, an electronic device includes a controller.

The controller is configured to detect an object based on a transmission signal transmitted as a transmission wave and a reception signal received as a reflection wave generated by the transmission wave being reflected by the object.

The controller adjusts a signal strength of the reception signal in accordance with a directivity of at least one of the transmission wave or the reflection wave.

In an embodiment, a method for controlling an electronic device includes

detecting an object based on a transmission signal transmitted as a transmission wave and a reception signal received as a reflection wave generated by the transmission wave being reflected by the object, and
adjusting a signal strength of the reception signal in accordance with a directivity of at least one of the transmission wave or the reflection wave.

In an embodiment, a program is configured to cause a computer to execute

detecting an object based on a transmission signal transmitted as a transmission wave and a reception signal received as a reflection wave generated by the transmission wave being reflected by the object, and
adjusting a signal strength of the reception signal in accordance with a directivity of at least one of the transmission wave or the reflection wave.

BRIEF DESCRIPTION OF THE DRAWINGS

FIG. 1 is a block diagram illustrating the functional configuration of an electronic device according to an embodiment.

FIG. 2 is a block diagram illustrating the functional configuration of a sensor according to an embodiment.

FIG. 3 is a diagram illustrating an example of a transmission signal transmitted by a sensor according to an embodiment.

FIG. 4 is a diagram illustrating an example of the configuration of a detection device according to an embodiment.

FIG. 5 is a diagram illustrating an example of object detection performed by a sensor according to an embodiment.

FIG. 6 is a flowchart for explaining the operation (learning phase) of an electronic device according to an embodiment.

FIG. 7 is a diagram for explaining an example of processing performed by an electronic device according to an embodiment.

FIG. 8 is a diagram for explaining an example of processing performed by an electronic device according to an embodiment.

FIG. 9 is a diagram illustrating an example of a two-dimensional map of adjustment values of an electronic device according to an embodiment.

FIG. 10 is a diagram illustrating an example of a two-dimensional map of adjustment values of an electronic device according to an embodiment.

FIG. 11 is a flowchart for explaining the operation (inference phase) of an electronic device according to an embodiment.

DESCRIPTION OF EMBODIMENTS

When detecting an object using radio waves having directivity using a sensor such as a millimeter wave radar, the detection strength may vary depending on the direction of the object relative to the sensor. When the detection strength varies depending on the direction of the object relative to the sensor, the accuracy with which the object is detected may be affected depending on the direction of the object relative to the sensor. The present disclosure provides an electronic device, a method for controlling an electronic device, and a program that improve the accuracy of object detection performed by a sensor having directivity. According to an embodiment, an electronic device, a method for controlling an electronic device, and a program that improve the accuracy of object detection performed by a sensor having directivity can be provided.

In the present disclosure, an "electronic device" may be a device that is driven by electric power. Furthermore, a "system" may include a device driven by electric power. Furthermore, a "user" may be a person (typically a human) who uses a system and/or an electronic device according to an embodiment. A user may include a person who benefits from detecting various objects by using a system and/or an electronic device according to an embodiment. An electronic device, method, and program of the present disclosure may be used to detect people, objects, animals, etc. present in a predetermined space such as a room, a bed, a bathroom, a toilet, a car, a bus, a train, a passageway, or a road.

An electronic device according to an embodiment described below can generate two-dimensionally processable point cloud information from point cloud information in a three-dimensional space detected by a sensor based on a technology such as millimeter wave radar. The electronic device according to an embodiment can detect the presence and position of an object based on two-dimensionally processable point cloud information by employing a technology such as image recognition. Furthermore, the electronic device according to an embodiment can reduce the effects of the directivity of a transmission wave and a reflection wave on the detection of an object, the reflection wave being generated by the transmission wave being reflected by the object. Hereinafter, an electronic device according to an embodiment will be described in detail with reference to the drawings.

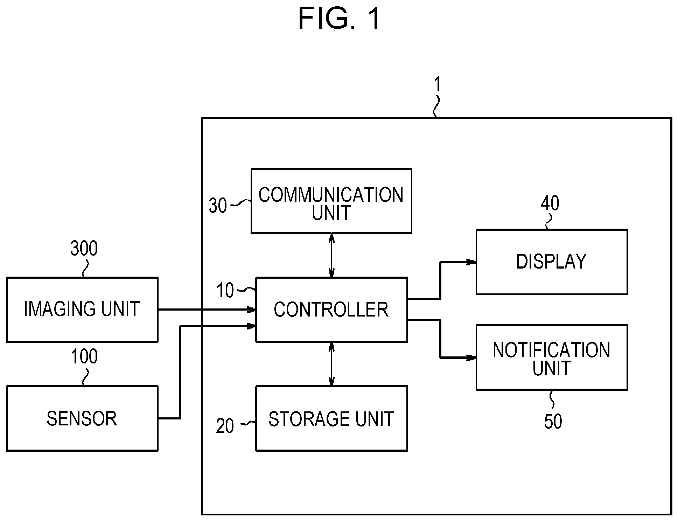

FIG. 1 is a functional block diagram schematically illustrating the configuration of an electronic device 1 according to an embodiment. As illustrated in FIG. 1, the electronic device 1 according to an embodiment includes a controller 10. In an embodiment, the electronic device 1 may include at least any one selected from a group consisting of a storage unit 20, a communication unit 30, a display 40, a notification unit 50, etc. as appropriate. The controller 10, the storage unit 20, the communication unit 30, the display 40, and the notification unit 50 etc. described above may be disposed or built into the electronic device 1 at any position. In addition, at least any one selected from a group consisting of the controller 10, the storage unit 20, the communication unit 30, the display 40, the notification unit 50 etc. described above may be disposed outside the electronic device 1 and connected to each other by a network that is based on wired or wireless connections or a combination of the two. At least some of the functional units illustrated in FIG. 1 may be omitted from the electronic device 1 according to an embodiment or the electronic device 1 according to an embodiment may include functional units other than those illustrated in FIG. 1 as appropriate.

The electronic device 1 according to an embodiment may be various devices. For example, the electronic device according to an embodiment may be any device, such as a specially designed terminal, as well as a general-purpose smartphone, a tablet, a phablet, a notebook computer (notebook PC), a computer, or a server. The electronic device according to an embodiment may have a function of communicating with another electronic device, such as a mobile phone or a smartphone. Here, the above-mentioned "other electronic device" may be, for example, an electronic device such as a mobile phone or a smartphone, or may be any device, such as a base station, a server, a dedicated terminal, or a computer. The "other electronic device" may be, for example, a sensor 100 and/or an imaging unit 300 etc. described below. The "other electronic device" in the present disclosure may also be a device or apparatus driven by electric power. When the electronic device according to an embodiment communicates with the other electronic device, the communication may be performed in a wired and/or wireless manner.

As illustrated in FIG. 1, the electronic device 1 according to an embodiment may be connected to the sensor 100 in a wired and/or wireless manner. Through such a connection, the electronic device 1 according to an embodiment can obtain information on the results of detection carried out by the sensor 100. The electronic device 1 according to an embodiment may be connected to the imaging unit 300 in a wired and/or wireless manner. With such a connection, the electronic device 1 according to an embodiment can obtain information of an image captured by the imaging unit 300. The sensor 100 and the imaging unit 300 will be further described below.

The controller 10 controls and/or manages the entire electronic device 1, including each functional unit constituting the electronic device 1. The controller 10 may include at least one processor, such as a CPU (central processing unit) or a DSP (digital signal processor), in order to provide control and processing power for executing various functions. The controller 10 may be implemented in the form of a single processor, several processors, or individual processors. The processor may be realized as a single integrated circuit. The integrated circuit is also called an IC (integrated circuit). The processor may be realized as multiple integrated circuits and discrete circuits connected to each other so as to be able to communicate with each other. The processor may be realized based on various other known technologies.

In an embodiment, the controller 10 may be configured as, for example, a CPU or a DSP and a program executed by the CPU or DSP. The program executed in the controller 10 and the results of the processing executed in the controller 10 etc. may be stored in the storage unit 20, for example. The controller 10 may include a memory necessary for operation of the controller 10 as appropriate.

In the electronic device 1 according to an embodiment, the controller 10 can perform various processing on information output as a result of detection performed by the sensor 100, for example. Therefore, in the electronic device 1, the controller 10 may be connected to the sensor 100 in a wired and/or wireless manner. In the electronic device 1 according to an embodiment, for example, the controller 10 can perform various processing on information (an image) output as a result of imaging performed by the imaging unit 300. Therefore, in the electronic device 1, the controller 10 may be connected to the imaging unit 300 in a wired and/or wireless manner. The operation of the controller 10 of the electronic device 1 according to an embodiment will be further described below.

The storage unit 20 may function as a memory that stores various information. The storage unit 20 may store, for example, a program executed in the controller 10 and the results of processing executed in the controller 10. The storage unit 20 may store or accumulate detection results output by the sensor 100 and/or images captured by the imaging unit 300 etc. The storage unit 20 may also function as a work memory of the controller 10. The storage unit 20 may be configured by, for example, a semiconductor memory or the like, but is not limited thereto, and may be any storage device. For example, the storage unit 20 may be a storage medium such as a memory card inserted into the electronic device 1 according to an embodiment. The storage unit 20 may also include, for example, a hard disk drive (HDD) and/or a solid state drive (SSD). The storage unit 20 may also be an internal memory of a CPU used as the controller 10 described later, or may be connected to the controller 10 as a separate unit.

The storage unit 20 may store, for example, machine learning data. Here, the machine learning data may be data generated through machine learning. Machine learning may be based on an AI (artificial intelligence) technology that enables a specific task to be performed through training. More specifically, machine learning may be a technology in which an information processing device such as a computer learns a large amount of data and automatically constructs an algorithm or model that performs tasks such as classification and/or prediction. In this specification, machine learning may be included as part of AI.

In the present specification, machine learning may include supervised learning in which the characteristics or rules of input data are learned based on correct answer data. In addition, machine learning may include unsupervised learning in which the characteristics or rules of input data are learned without correct answer data. Furthermore, machine learning may include reinforcement learning in which the characteristics or rules of input data are learned by giving rewards or punishments. In addition, in the present specification, machine learning may be any combination of supervised learning, unsupervised learning, and reinforcement learning. The concept of machine learning data in this embodiment may include an algorithm that outputs a predetermined inference (estimation) result using an algorithm trained on input data. In this embodiment, as this algorithm, for example, linear regression that predicts the relationship between a dependent variable and an independent variable, a neural network (NN) that mathematically models the neurons of the nervous system of the human brain, a least squares method in which a calculation is performed by squaring an error, a decision tree that solves problems in a tree structure, and regularization in which data is transformed in a predetermined manner, as well as other appropriate algorithms can be used. In this embodiment, deep learning, which is a type of neural network, may be utilized. Deep learning is a type of neural network, and a neural network with a deep network hierarchy is called deep learning.

The communication unit 30 has an interface function for performing wired or wireless communication. The communication method used by the communication unit 30 in an embodiment may comply with a wireless communication standard. Examples of such a wireless communication standard include cellular phone communication standards such as 2G, 3G, 4G, and 5G. For example, cellular phone communication standards include LTE (long term evolution), W-CDMA (wideband code division multiple access), CDMA2000, PDC (personal digital cellular), GSM (registered trademark) (global system for mobile communications), and PHS (personal handy-phone system). For example, wireless communication standards include WiMAX (worldwide interoperability for microwave access), IEEE802.11, WiFi, Bluetooth (Registered Trademark), IrDA (infrared data association), and NFC (near field communication). The communication unit 30 may include, for example, a modem whose communication method is standardized by ITU-T (international telecommunication union telecommunication standardization sector). The communication unit 30 can support one or more of the above communication standards.

The communication unit 30 may include, for example, an antenna for transmitting and receiving radio waves and an appropriate RF unit. The communication unit 30 may perform wireless communication with, for example, a communication unit of another electronic device via, for example, an antenna. The communication unit 30 may also be configured as an interface such as a connector for realizing a wired connection to the outside. The communication unit 30 may be configured using known technologies for performing wireless communication, and therefore a more detailed description of the hardware and so forth is omitted.

Various types of information received by the communication unit 30 may be supplied to, for example, the storage unit 20 and/or the controller 10. Various types of information received by the communication unit 30 may be stored in, for example, a memory built into the controller 10. The communication unit 30 may also transmit, for example, the results of processing performed by the controller 10 and/or information stored in the storage unit 20 to the outside.

The display 40 may be any display device, such as a liquid crystal display (LCD), an organic electro-luminescence panel, or an inorganic electro-luminescence panel. The display 40 may display various information such as characters, figures, or symbols. The display 40 may also display various objects making up a GUI and icon images, for example, to prompt the user to operate the electronic device 1. Various types of data necessary for performing display on the display 40 may be supplied from, for example, the controller 10 or the storage unit 20. In addition, when the display 40 includes, for example, an LCD, the display 40 may be configured to include a backlight, etc., as appropriate. In an embodiment, the display 40 may display information based on, for example, the results of detection performed by the sensor 100. In an embodiment, the display 40 may display information based on, for example, the results of imaging performed by the imaging unit 300.

The notification unit 50 may issue a predetermined warning to alert the user of the electronic device 1, etc., based on a predetermined signal output from the controller 10. As the predetermined warning, the notification unit 50 may be any functional unit that stimulates at least one selected from a group consisting of the hearing, vision, and touch of the user, such as sound, voice, light, characters, images, or vibration. Specifically, the notification unit 50 may be at least any one selected from a group consisting of an audio output unit such as a buzzer or speaker, a light emitting unit such as an LED, a display such as an LCD, and a tactile sensation providing unit such as a vibrator. In this way, the notification unit 50 may issue a predetermined warning based on a predetermined signal output from the controller 10. In an embodiment, the notification unit 50 may issue the predetermined warning as information that acts on at least any one of the senses selected from a group consisting of hearing, vision, and touch.

The electronic device 1 illustrated in FIG. 1 has the notification unit 50 built thereinto. However, in an embodiment, the notification unit 50 may be provided outside the electronic device 1. In this case, the notification unit 50 and the electronic device 1 may be connected to each other in a wired or wireless manner, or with a combination of wired and wireless manners.

At least part of each of the functional units constituting the electronic device 1 according to an embodiment as illustrated in FIG. 1 may be configured by a specific means in which software and hardware resources work together.

The sensor 100 illustrated in FIG. 1 is configured to detect an object (target) such as an automobile or a human body as point cloud information in a three-dimensional space. The sensor 100 according to an embodiment will be described in more detail below.

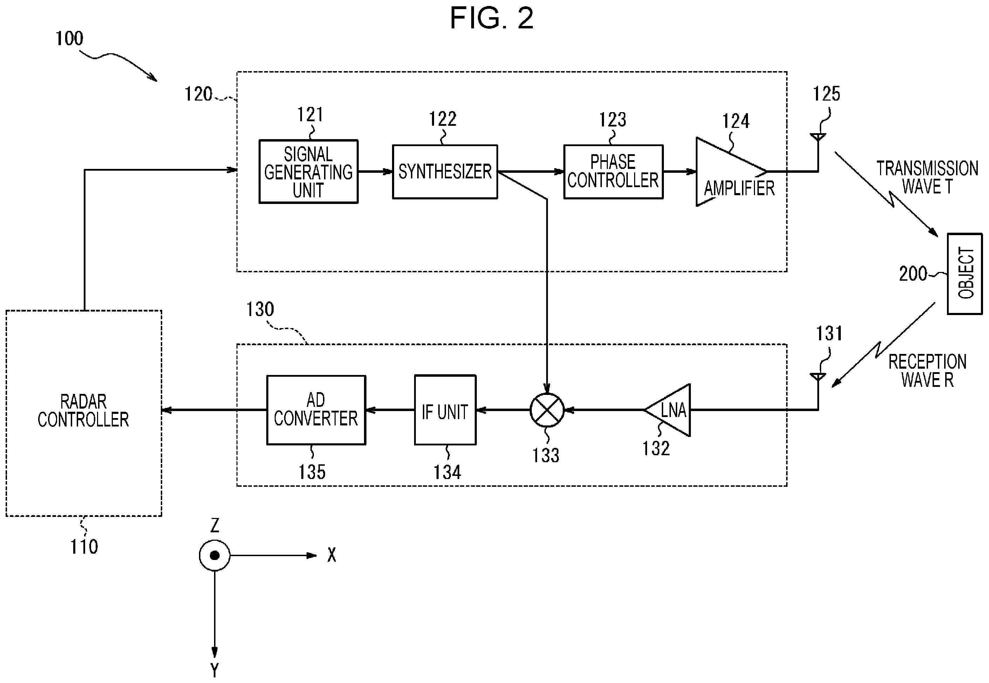

FIG. 2 is a functional block diagram schematically illustrating configuration of the sensor 100 according to an embodiment. The sensor 100 illustrated in FIG. 2 is, as an example, a sensor based on millimeter wave radar (radio detecting and ranging) technology (a millimeter wave radar sensor). However, the sensor 100 according to an embodiment is not limited to a millimeter wave radar sensor. The sensor 100 according to an embodiment may be, for example, a quasi-millimeter wave radar sensor. Moreover, the sensor 100 according to an embodiment is not limited to a millimeter wave radar sensor or a quasi-millimeter wave radar sensor, and may be any type of radar sensor that transmits and receives radio waves. The sensor 100 according to an embodiment may be, for example, a microwave sensor, an ultrasonic sensor, or a sensor based on a technology such as LIDAR (light detection and ranging, laser imaging detection and ranging).

A frequency modulated continuous wave radar (hereinafter, FMCW radar) may be used when measuring distances and the like using a millimeter wave radar. In an FMCW radar, a transmission signal is generated by sweeping the frequency of the radio waves to be transmitted. Therefore, for example, in a millimeter-wave FMCW radar that uses radio waves in the 79 GHz frequency band, the frequency of the radio waves being used will have a frequency bandwidth of 4 GHz, for example, from 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands. Hereafter, a case where such an FMCW radar is used will be described as an example. The FMCW radar system used in the present disclosure may include an FCM (fast-chirp modulation) system in which a chirp signal with a shorter period than normal is transmitted. The signal generated by the sensor 100 is not limited to an FMCW system signal. The signal generated by the sensor 100 may be a signal of various systems other than the FMCW system. A transmission signal sequence stored as a signal to be transmitted may differ depending on these various systems. For example, in the case of the radar signal of the above-mentioned FMCW system, a signal whose frequency increases and decreases in each time sample may be used. Since the above-mentioned various systems can be appropriately applied using known techniques, a more detailed description is omitted as appropriate.

As illustrated in FIG. 2, the sensor 100 according to an embodiment may include a radar controller 110, a transmission unit 120, and a reception unit 130. The above-mentioned radar controller 110, transmission unit 120, reception unit 130, and so on may be disposed in or built into the sensor 100 at any position. In addition, at least any one selected from a group consisting of the above-mentioned radar controller 110, transmission unit 120, and reception unit 130 may be disposed outside the sensor 100. At least some of the functional units illustrated in FIG. 2 may be omitted from the sensor 100 according to an embodiment or the sensor 100 according to an embodiment may include other functional units than the functional units illustrated in FIG. 2 as appropriate.

The radar controller 110 controls and/or manages the entire sensor 100, including each functional unit constituting the sensor 100. The radar controller 110 may include at least one processor, such as a CPU (central processing unit) or a DSP (digital signal processor), to provide control and processing capabilities for executing various functions. The radar controller 110 may be implemented collectively in a single processor, in several processors, or in individual processors. The processor may be realized as a single integrated circuit. The integrated circuit is also called an IC (integrated circuit). The processor may be realized as multiple integrated circuits and discrete circuits connected to each other so as to be able to communicate with each other. The processor may be realized based on various other known technologies.

In an embodiment, the radar controller 110 may be configured as, for example, a CPU or DSP and a program executed by the CPU or DSP. The program executed in the radar controller 110, the results of the processing executed in the radar controller 110, and so on may be stored in any storage unit built into the radar controller 110, for example. The radar controller 110 may include a memory necessary for operation of the radar controller 110 as appropriate.

In the sensor 100 according to an embodiment, the radar controller 110 may perform various processing such as distance FFT (fast Fourier transform) processing, velocity FFT processing, arrival angle estimation processing, and clustering processing, as appropriate. Since each type of processing performed by the radar controller 110 is a known general radar technology, more detailed description thereof is omitted.

As illustrated in FIG. 2, the transmission unit 120 may include a signal generating unit 121, a synthesizer 122, a phase controller 123, an amplifier 124, and a transmission antenna 125. The sensor 100 according to an embodiment may include multiple transmission antennas 125. In this case, the sensor 100 may also include multiple phase controllers 123 and multiple amplifiers 124 respectively corresponding to multiple transmission antennas 125. When the sensor 100 according to an embodiment includes multiple transmission antennas 125, the multiple transmission antennas 125 may constitute a transmission antenna array (transmission array antenna).

As illustrated in FIG. 2, the reception unit 130 may include a reception antenna 131, an LNA 132, a mixer 133, an IF unit 134, and an AD converter 135. The sensor 100 according to an embodiment may include multiple reception units 130 respectively corresponding to the multiple transmission antennas 125.

In the sensor 100 according to an embodiment, the radar controller 110 can control at least one of the transmission unit 120 or the reception unit 130. In this case, the radar controller 110 may control at least one of the transmission unit 120 or the reception unit 130 based on various information stored in any storage unit. For example, any storage unit built into the radar controller 110 may store various parameters for setting a range in which an object is to be detected by a transmission wave transmitted from the transmission antenna 125 and a reflection wave received from the reception antenna 131. In addition, in the sensor 100 according to an embodiment, the radar controller 110 may instruct the signal generating unit 121 to generate a signal or control the signal generating unit 121 to generate a signal.

The signal generating unit 121 generates a signal (transmission signal) to be transmitted as a transmission wave from the transmission antenna 125 in response to control performed by the radar controller 110. When generating the transmission signal, the signal generating unit 121 may assign the frequency of the transmission signal based on, for example, control performed by the radar controller 110. Specifically, the signal generating unit 121 may assign the frequency of the transmission signal in accordance with, for example, a parameter set by the radar controller 110. For example, the signal generating unit 121 receives frequency information from the radar controller 110 or any storage unit, and generates a signal of a predetermined frequency in a frequency band such as 77 to 81 GHz. The signal generating unit 121 may include a functional unit such as a voltage controlled oscillator (VCO).

The signal generating unit 121 may be configured as hardware having the relevant function, may be configured as a microcomputer, or may be configured as a processor such as a CPU or DSP and a program executed by the processor. Each functional unit described below may also be configured as hardware having the relevant function, or may be configured as a microcomputer, or may be configured as a processor such as a CPU or DSP and a program executed by the processor, if possible.

In the sensor 100 according to an embodiment, the signal generating unit 121 may generate a transmission signal such as a chirp signal (transmission chirp signal). In particular, the signal generating unit 121 may generate a signal whose frequency changes periodically in a linear manner (linear chirp signal). For example, the signal generating unit 121 may generate a chirp signal whose frequency increases periodically in a linear manner from 77 GHz to 81 GHz over time. In addition, for example, the signal generating unit 121 may generate a signal whose frequency periodically undergoes a linear increase (up-chirp) and a linear decrease (down-chirp) from 77 GHz to 81 GHz repeatedly over time. The signal generated by the signal generating unit 121 may be set in advance in the radar controller 110, for example. Furthermore, the signal generated by the signal generating unit 121 may be stored in advance in any storage unit, for example. Since chirp signals used in technical fields such as radar are known, more detailed description will be simplified or omitted as appropriate. The signal generated by the signal generating unit 121 is supplied to the synthesizer 122.

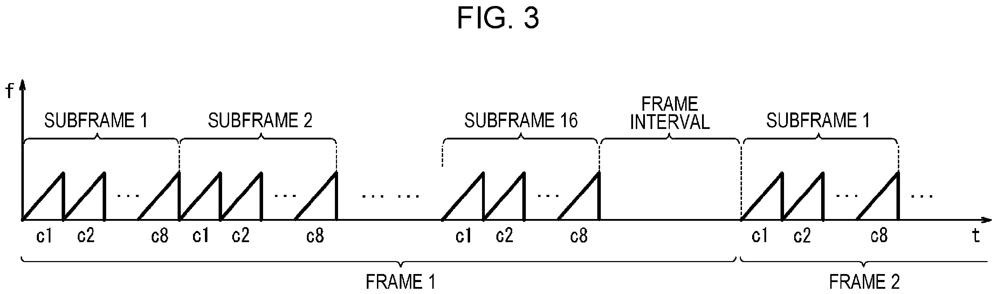

FIG. 3 is a diagram for explaining an example of a chirp signal generated by the signal generating unit 121.

In FIG. 3, the horizontal axis represents elapsed time, and the vertical axis represents frequency. In the example illustrated in FIG. 3, the signal generating unit 121 generates a linear chirp signal whose frequency varies periodically in a linear manner. In FIG. 3, each chirp signal is denoted as $c_1$, $c_2$, ..., $c_8$. As illustrated in FIG. 3, the frequency of each chirp signal increases linearly with time.

In the example illustrated in FIG. 3, eight chirp signals such as $c_1$, $c_2$, ..., $c_8$ are included in one subframe. That is, a subframe 1 and a subframe 2 etc. illustrated in FIG. 3 each include eight chirp signals such as $c_1$, $c_2$, ..., $c_8$. In addition, in the example illustrated in FIG. 3, sixteen subframes such as the subframe 1 to a subframe 16 are included in one frame. That is, a frame 1 and a frame 2 etc. illustrated in FIG. 3 each include sixteen subframes. In addition, as illustrated in FIG. 3, a frame interval of a predetermined length may be provided between the frames. One frame illustrated in FIG. 3 may be, for example, from around 30 milliseconds to 50 milliseconds long.

In FIG. 3, the frame 2 and subsequent frames may have the same or a similar configuration. In addition, in FIG. 3, a frame 3 and subsequent frames may also have the same or a similar configuration. In the sensor 100 according to an embodiment, the signal generating unit 121 may generate a transmission signal with any number of frames. Furthermore, in FIG. 3, illustration of some chirp signals is omitted. In this way, the relationship between time and frequency of the transmission signal generated by the signal generating unit 121 may be stored in, for example, any storage unit.

In this way, the sensor 100 according to an embodiment may transmit a transmission signal composed of subframes each including multiple chirp signals. In addition, the sensor 100 according to an embodiment may transmit a transmission signal composed of frames each including a predetermined number of subframes.

Hereinafter, the sensor 100 will be described as transmitting a transmission signal having a frame structure as illustrated in FIG. 3. However, the frame structure as illustrated in FIG. 3 is only an example, and, for example, the number of chirp signals included in one subframe is not limited to eight. In an embodiment, the signal generating unit 121 may generate subframes that each include an arbitrary number (for example, any plurality) of chirp signals. Furthermore, the subframe structure illustrated in FIG. 3 is also an example, and the number of subframes included in one frame is not limited to sixteen. In an embodiment, the signal generating unit 121 may generate a frame including any number of subframes (for example, any plurality). The signal generating unit 121 may generate signals having different frequencies. The signal generating unit 121 may generate multiple discrete signals of bandwidths with different frequencies f.

Returning to FIG. 2, the synthesizer 122 increases the frequency of the signal generated by the signal generating unit 121 to a frequency in a predetermined frequency band. The synthesizer 122 may increase the frequency of the signal generated by the signal generating unit 121 to a frequency selected as the frequency of the transmission wave to be transmitted from the transmission antenna 125. The frequency selected as the frequency of the transmission wave to be transmitted from the transmission antenna 125 may be set by the radar controller 110, for example. In addition, the frequency selected as the frequency of the transmission wave to be transmitted from the transmission antenna 125 may be stored in, for example, any storage unit. The signal whose frequency has been increased by the synthesizer 122 is supplied to the phase controller 123 and the mixer 133. When there are multiple phase controllers 123, the signal whose frequency has been increased by the synthesizer 122 may be supplied to each of the multiple phase controllers 123. When there are multiple reception units 130, the signal whose frequency has been increased by the synthesizer 122 may be supplied to each of the mixers 133 in the multiple reception units 130.

The phase controller 123 controls the phase of the transmission signal supplied from the synthesizer 122. Specifically, the phase controller 123 may adjust the phase of the transmission signal by appropriately advancing or delaying the phase of the signal supplied from the synthesizer 122 based on control performed by the radar controller 110, for example. In this case, the phase controller 123 may adjust the phase of each transmission signal based on the path difference of the transmission wave to be transmitted from the corresponding one of the multiple transmission antennas 125. As a result of the phase controller 123 appropriately adjusting the phase of each transmission signal, the transmission waves transmitted from the multiple transmission antennas 125 reinforce each other in a predetermined direction to form a beam (beamforming). In this case, the correlation between the direction of beamforming and the to-be-controlled phase amounts of the transmission signals to be transmitted by the multiple transmission antennas 125 may be stored in, for example, any storage unit. The transmission signal, whose phase has been controlled by the phase controller 123, is supplied to the amplifier 124.

The amplifier 124 amplifies the power (electrical power) of the transmission signal supplied from the phase controller 123 based on, for example, control performed by the radar controller 110. When the sensor 100 includes multiple transmission antennas 125, the multiple amplifiers 124 may each amplify the power (electrical power) of the transmission signal supplied from the corresponding one of the multiple phase controllers 123 based on, for example, control performed by the radar controller 110. Since technologies for amplifying the power of a transmission signal are already known, a more detailed description thereof is omitted. The amplifier 124 is connected to the transmission antenna 125.

The transmission antenna 125 outputs (transmits) the transmission signal amplified by the amplifier 124 as a transmission wave. When the sensor 100 includes multiple transmission antennas 125, the multiple transmission antennas 125 may each output (transmit) the transmission signal amplified by the corresponding one of the multiple amplifiers 124 as a transmission wave. The transmission antenna 125 may be configured in the same or a similar manner to a transmission antenna used in known radar technology, and therefore a detailed description thereof is omitted.

In this way, the sensor 100 according to an embodiment includes the transmission antenna 125, and can transmit a transmission signal (e.g., a transmission chirp signal) as a transmission wave from the transmission antenna 125. Here, at least one of the functional units constituting the sensor 100 may be housed in a single housing. In addition, in this case, the single housing may have a structure that cannot be easily opened. For example, the transmission antenna 125, the reception antenna 131, and the amplifier 124 are preferably housed in a single housing, and the housing preferably has a structure that cannot be easily opened. In addition,

The sensor 100 illustrated in FIG. 2 depicts an example including one transmission antenna 125. However, in an embodiment, the sensor 100 may include any number of transmission antennas 125. On the other hand, in an embodiment, the sensor 100 may include multiple transmission antennas 125 when the transmission waves transmitted from the transmission antennas 125 are to form a beam in a predetermined direction. In an embodiment, the sensor 100 may include any plural number of transmission antennas 125. In this case, the sensor 100 may also include multiple phase controllers 123 and amplifiers 124 respectively corresponding to the multiple transmission antennas 125. The multiple phase controllers 123 may respectively control the phases of the multiple transmission waves supplied from the synthesizer 122 and transmitted from the multiple transmission antennas 125. Furthermore, the multiple amplifiers 124 may respectively amplify the power of the transmission signals to be transmitted from the transmission antennas 125. In this case, the sensor 100 may include multiple transmission antennas. In this way, when the sensor 100 includes multiple transmission antennas 125, the sensor 100 may also include multiple functional units required for transmitting transmission waves from the transmission antennas 125.

The reception antenna 131 receives a reflection wave. The reflection wave may be wave generated by a transmission wave being reflected by a predetermined object 200. The reception antenna 131 may include multiple antennas. When the sensor 100 according to an embodiment includes multiple reception antennas 131, the multiple reception antennas 131 may constitute a reception antenna array (reception array antenna). The reception antenna 131 may be configured in the same or a similar manner to a reception antenna used in a known radar technology, and therefore a detailed description thereof is omitted. The reception antenna 131 is connected to the LNA 132. A reception signal based on a reflection wave received by the reception antenna 131 is supplied to the LNA 132. Thus, when the sensor 100 includes multiple reception antennas 131, the sensor 100 may also include multiple functional units required for receiving and processing reflection waves from the multiple reception antennas 131.

The sensor 100 according to an embodiment can receive, from the multiple reception antennas 131, a reflection wave generated by a transmission wave transmitted as a transmission signal (transmission chirp signal), such as a chirp signal, being reflected by the predetermined object 200. Thus, when a transmission chirp signal is transmitted as a transmission wave, a reception signal based on the received reflection wave is also referred to as a reception chirp signal. That is, the sensor 100 receives a reception signal (e.g., a reception chirp signal) as a reflection wave from the reception antenna 131.

The LNA 132 amplifies the reception signal based on the reflection wave received by the reception antenna 131 with low noise. The LNA 132 may be a low noise amplifier, and amplifies the reception signal supplied from the reception antenna 131 with low noise. The reception signal amplified by the LNA 132 is supplied to the mixer 133.

The mixer 133 generates a beat signal by mixing (multiplying) the reception signal of an RF frequency supplied from the LNA 132 with the transmission signal supplied from the synthesizer 122. The beat signal mixed by the mixer 133 is supplied to the IF unit 134.

The IF unit 134 performs frequency conversion on the beat signal supplied from the mixer 133, and thereby lowers the frequency of the beat signal to an intermediate frequency (IF frequency). The beat signal whose frequency has been lowered by the IF unit 134 is supplied to the AD converter 135.

The AD converter 135 digitizes the analog beat signal supplied from the IF unit 134. The AD converter 135 may be configured with any analog-to-digital conversion circuit (ADC). The beat signal digitized by the AD converter 135 is supplied to the radar controller 110. When there are multiple reception units 130, each of the beat signals digitized by the multiple AD converters 135 may be supplied to the radar controller 110.

The radar controller 110 may perform FFT processing on the beat signal digitized by the AD converter 135 (hereinafter, referred to as "distance FFT processing" as appropriate). For example, the radar controller 110 may perform FFT processing on the complex signal supplied from the AD converter 135. The beat signal digitized by the AD converter 135 can be expressed as changes in signal strength (power) over time. The radar controller 110 can express such a beat signal as a signal strength (power) corresponding to each frequency by performing FFT processing on the beat signal. By performing distance FFT processing in the radar controller 110, a complex signal corresponding to distance can be obtained based on the beat signal digitized by the AD converter 135.

When a peak in the results obtained by the distance FFT processing is greater than or equal to a predetermined threshold, the radar controller 110 may determine that the predetermined object 200 is present at a distance corresponding to the peak. For example, a method is known in which an object reflecting a transmission wave (a reflecting object) is judged to be present when a peak value greater than or equal to a threshold is detected from the average power or amplitude of a disturbance signal, as in detection processing using a constant false alarm rate (CFAR).

Thus, the sensor 100 according to an embodiment can detect the object 200 reflecting a transmission wave as a target based on a transmission signal transmitted as a transmission wave and a reception signal received as a reflection wave.

The radar controller 110 can estimate the distance to a predetermined object based on one chirp signal (e.g., c1 illustrated in FIG. 3). That is, the sensor 100 can measure (estimate) the distance between the sensor 100 and the predetermined object 200 by performing distance FFT processing. Since technologies for measuring (estimating) the distance to a predetermined object by performing FFT processing on a beat signal are well known, a more detailed description thereof is simplified or omitted as appropriate.

In addition, the radar controller 110 may perform FFT processing (hereinafter, referred to as "velocity FFT processing" as appropriate) on the beat signal that has been subjected to distance FFT processing. For example, the radar controller 110 may perform FFT processing on the complex signal resulting from distance FFT processing. The radar controller 110 can estimate the relative velocity with respect to the predetermined object based on a subframe of the chirp signal (e.g, subframe 1 illustrated in FIG. 3). By performing velocity FFT processing for multiple chirp signals in the radar controller 110, a complex signal corresponding to the relative velocity can be obtained based on the complex signal corresponding to the distance obtained by the distance FFT processing.

By performing distance FFT processing on the beat signal as described above, multiple vectors can be generated. By obtaining the phase of the peak in the results of performing velocity FFT processing on these multiple vectors, the relative velocity with respect to the predetermined object can be estimated. That is, the electronic device 1 can measure (estimate) the relative velocity between the sensor 100 and the predetermined object 200 by performing velocity FFT processing. Technologies for measuring (estimating) the relative velocity with respect to a predetermined object by performing velocity FFT processing on the results of distance FFT processing are well known, and therefore more detailed description thereof is simplified or omitted as appropriate.

In a general FMCW radar technology, whether or not a target is present can be determined based on the results obtained by performing fast Fourier transform processing on a beat frequency extracted from a reception signal and so forth. Here, results obtained by extracting the beat frequency from the reception signal, performing fast Fourier transform processing and so forth include noise components due to clutter (unwanted reflection components). Therefore, processing may be performed to remove the noise components from the results obtained by processing the reception signal and extract only the target signal.

In addition, the radar controller 110 may estimate the direction from which the reflection wave arrives from the predetermined object 200 (angle of arrival) based on the determination as to whether or not a target is present. The radar controller 110 may estimate the angle of arrival for a point where a target is determined to exist. The sensor 100 can receive a reflection wave from the multiple reception antennas 131, and estimate the direction from which the reflection wave arrives. For example, the multiple reception antennas 131 are disposed at a predetermined interval. In this case, the transmission wave transmitted from the transmission antenna 125 is reflected by the predetermined object 200 and becomes a reflection wave, and the multiple reception antennas 131 disposed at a predetermined interval each receive a reflection wave R. Then, the radar controller 110 can estimate the direction from which reflection waves arrive at the reception antennas 131 based on the phase of the reflection wave received by each of the multiple reception antennas 131 and the path difference for each reflection wave. That is, the sensor 100 can measure (estimate) an angle of arrival $\theta$ indicating the direction from which the reflection wave reflected by the target arrives based on the result of the velocity FFT processing.

Various techniques have been proposed for estimating the direction from which the reflection wave R arrives based on the result of velocity FFT processing. For example, known algorithms for estimating the direction of arrival include MUSIC (multiple signal classification) and ESPRIT (estimation of signal parameters via rotational invariance technique). Therefore, a more detailed description of known techniques is simplified or omitted as appropriate.

The radar controller 110 detects an object present within the range where the transmission wave is transmitted based on at least one selected from a group consisting of distance FFT processing, velocity FFT processing, and arrival angle estimation. The radar controller 110 may perform object detection by, for example, performing clustering processing based on supplied distance information, velocity information, and angle information. Known algorithms used for clustering data include, for example, DBSCAN (density-based spatial clustering of applications with noise). In the clustering processing, for example, the average power of points constituting a detected object may be calculated.

As described above, the sensor 100 can detect an object that reflects a transmission wave in a three-dimensional space as point cloud information. That is, in an embodiment, based on a detection result output from the sensor 100, whether or not an object reflecting a transmission wave exists at certain coordinates in the three-dimensional space can be determined (detected). In addition, in an embodiment, the sensor 100 can detect the signal strength and velocity at each point in the three-dimensional space. As described above, the sensor 100 according to an embodiment may detect an object reflecting a transmission wave as point cloud information in a three-dimensional space based on a transmission signal transmitted as a transmission wave and a reception signal received as a reflection wave generated by reflection of the transmission wave.

In addition, as illustrated in FIG. 1, the electronic device 1 according to an embodiment may include the imaging unit 300. The electronic device 1 and the imaging unit 300 may be connected to each in a wired or wireless manner, or in a combination of wired and wireless manners.

The imaging unit 300 may include an image sensor that electronically captures an image, such as a digital camera. The imaging unit 300 may include an imaging element that performs photoelectric conversion such as a CCD (charge coupled device image sensor) or a CMOS (complementary metal oxide semiconductor) sensor. The imaging unit 300 may capture an image of an object present in front of the imaging unit 300, for example. Here, the object present in front of the imaging unit 300 may be, for example, a car, a human, and/or any object present in the surroundings. The imaging unit 300 may convert the captured image into a signal and transmit the signal to the electronic device 1. For example, the imaging unit 300 may transmit a signal based on the captured image to an extraction unit 11, the storage unit 20, and/or the controller 10 etc. of the electronic device 1. The imaging unit 300 is not limited to an imaging device such as a digital camera, and may be any device capable of capturing an image of an object. The imaging unit 300 may be, for example, a LIDAR (light detection and ranging).

In an embodiment, the imaging unit 300 may capture still images at predetermined intervals (for example, 15 frames per second), for example. In addition, in an embodiment, the imaging unit 300 may capture continuous video images, for example.

Next, the arrangement of the sensor 100 and the imaging unit 300 connected to the electronic device 1 according to an embodiment will be described.

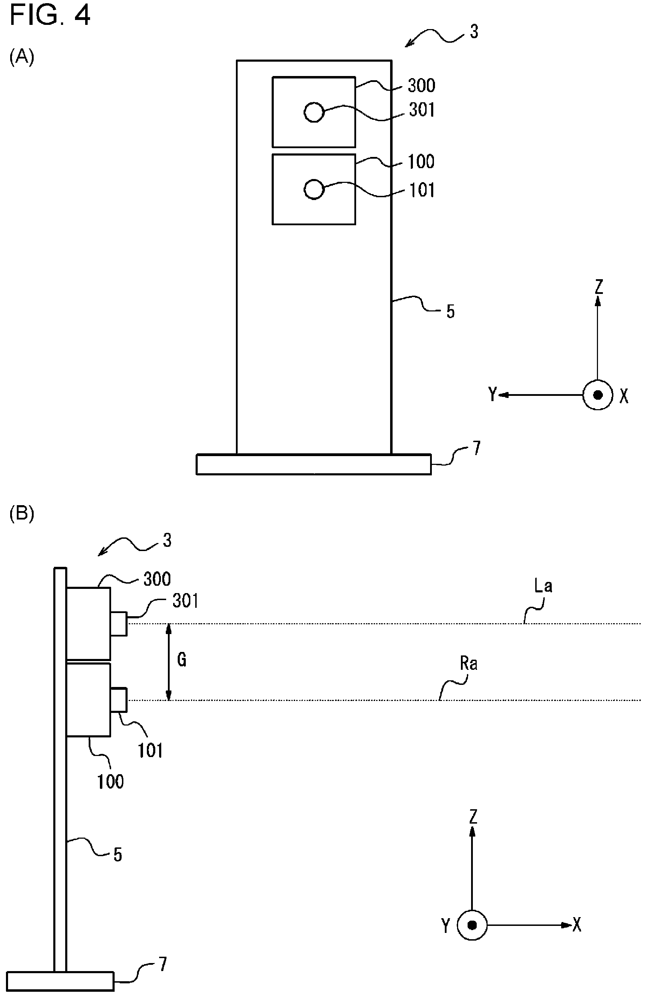

FIG. 4A and FIG. 4B are diagrams illustrating an example of the configuration of a detection device in which the sensor 100 and the imaging unit 300 are disposed.

FIG. 4A is a front view illustrating an example in which a detection device 3 according to an embodiment is viewed from the front. FIG. 4B is a side view illustrating an example in which the detection device 3 according to an embodiment is viewed from the side (left). The coordinate axes illustrated in FIG. 4A and FIG. 4B are aligned with the coordinate axes indicating the propagation direction of a transmission wave and/or reflection wave of the sensor 100 illustrated in FIG. 2.

As illustrated in FIG. 4A and FIG. 4B, the detection device 3 according to an embodiment may include the sensor 100 and the imaging unit 300. As illustrated in FIG. 4A and FIG. 4B, the detection device 3 according to an embodiment may further include at least one of a stand part 5 or a ground part 7 as appropriate. The detection device 3 according to an embodiment may be disposed in or on any other device or housing of another device without the inclusion of at least one of the stand part 5 or the ground part 7.

The sensor 100 illustrated in FIG. 4A and FIG. 4B may be the sensor 100 described in FIG. 1 and/or FIG. 2. As illustrated in FIG. 4A and FIG. 4B, the sensor 100 may include a radio wave input unit 101 that receives a reflection wave generated by a transmission wave being reflected by an object. As illustrated in FIG. 4B, the radio wave input unit 101 may be aligned with an optical axis Ra of the sensor 100. Here, the optical axis of the sensor 100 may, for example, extend in a direction perpendicular to a surface on which at least one of the transmission antenna 125 or the reception antenna 131 of the sensor 100 is installed. In addition, when a plurality of at least one of the transmission antenna 125 or the reception antenna 131 is provided, the optical axis of the sensor 100 may extend in a direction perpendicular to a surface on which at least any one of the multiple antennas is installed. With such a configuration, the sensor 100 can transmit a transmission wave and/or receive a reflection wave centered on the optical axis Ra. That is, the sensor 100 can detect an object as a point cloud within a range centered on the optical axis Ra.

The sensor 100 according to an embodiment may have directivity. That is, the sensor 100 may detect an object using radio waves having directivity. Here, "directivity" may be the relationship between the radiation direction and radiation intensity of radio waves as a characteristic of the antenna. The presence or absence of directivity is related to the application of the antenna. An antenna with a high directivity strongly radiates radio waves in a specific direction. The directivity may be the same characteristic in the case of transmission and the case of reception. The electric field strength of the radio waves radiated by the antenna can be expressed in decibels (dB) as the gain of the antenna. The sensor 100 according to an embodiment may have a main lobe (main beam) in the direction of the optical axis Ra illustrated in FIG. 4B, for example, as a result having directivity. That is, the sensor 100 according to an embodiment may have the strongest radiation level in the direction of the optical axis Ra, for example.

The imaging unit 300 illustrated in FIG. 4A and FIG. 4B may be the imaging unit 300 described in FIG. 1. As illustrated in FIG. 4A and FIG. 4B, the imaging unit 300 may include an optical input unit 301 that receives light reflected by an object. As illustrated in FIG. 4B, the optical input unit 301 may be aligned with the optical axis La of the imaging unit 300. The optical input unit 301 may be located at a position where a lens is disposed in the imaging unit 300. Here, the optical axis of the imaging unit 300 may be, for example, a direction perpendicular to a surface on which a light receiving element (or an imaging element) used for imaging in the imaging unit 300 is installed. With such a configuration, the imaging unit 300 can capture an image centered on the optical axis La.

As illustrated in FIGs. 4A and 4B, the stand part 5 maintains the sensor 100 and the imaging unit 300 at a predetermined height from the ground in the detection device 3. The stand part 5 may maintain the sensor 100 at a height at which the sensor 100 can easily detect a predetermined object. The stand part 5 may maintain the sensor 100 at a height at which the imaging unit 300 can easily capture an image of a predetermined object. The stand part 5 may include a mechanism that can adjust the sensor 100 and the imaging unit 300 in the detection device 3 in the height direction, for example.

As illustrated in FIG. 4A and FIG. 4B, the ground part 7 fixes the sensor 100 and the imaging unit 300 to the ground surface in the detection device 3. The ground part 7 may have various configurations, such as a pedestal shape, in order to stabilize the detection device 3 including the sensor 100 and the imaging unit 300.

As illustrated in FIG. 4A and FIG. 4B, in the detection device 3 according to an embodiment, the sensor 100 and the imaging unit 300 may be disposed adjacent to each other in the vicinity of each other. In the example illustrated in FIG. 4A and FIG. 4B, the sensor 100 and the imaging unit 300 are disposed adjacent to each other in the up-down direction. In the detection device 3 according to an embodiment, the sensor 100 and the imaging unit 300 may be disposed adjacent to each other in the left-right direction or a diagonal direction, for example.

In addition, as illustrated in FIG. 4B, in the detection device 3 according to an embodiment, the sensor 100 and the imaging unit 300 may be disposed so that the respective optical axes Ra and La thereof are parallel to each other. That is, in the electronic device 1 according to an embodiment, point cloud information from the sensor 100 and image information from the imaging unit 300 may be used with the imaging unit 300 and the sensor 100 installed so that the optical axis La of the imaging unit 300 is parallel to the optical axis Ra of the sensor 100.

In addition, as illustrated in FIG. 4B, in the detection device 3 according to an embodiment, the sensor 100 and the imaging unit 300 may be disposed so that the distance between their respective optical axes Ra and La is maintained at a distance G. By disposing the sensor 100 and the imaging unit 300 in this way, the point cloud information from the sensor 100 and the image information from the imaging unit 300 are shifted from each other by the distance G. For example, in the arrangement illustrated in FIG. 4B, the image information from the imaging unit 300 is shifted upward by the distance G from the point cloud information from the sensor 100. In addition, in the arrangement illustrated in FIG. 4B, the point cloud information from the sensor 100 is shifted downward by the distance G from the image information from the imaging unit 300.

Therefore, in the arrangement illustrated in FIG. 4B, for example, by correcting the point cloud information from the sensor 100 so as to shift the point cloud information upward by the distance G, the position of the point cloud information from the sensor 100 can be made to correspond to the position of the image information from the imaging unit 300. In addition, in the arrangement illustrated in FIG. 4B, for example, by correcting the image information from the imaging unit 300 so as to shift the image information downward by the distance G, the position of the image information from the imaging unit 300 can be made to correspond to the position of the point cloud information from the sensor 100. In this way, the electronic device 1 may correct at least one of the point cloud information from the sensor 100 or the image information from the imaging unit 300 so that the point cloud information from the sensor 100 and the image information from the imaging unit 300 positionally correspond to each other.

In other words, in the electronic device 1 according to an embodiment, at least one of the point cloud information obtained by the sensor 100 detecting an object (target) or the image information obtained by the imaging unit 300 capturing an image of the object (target) may be corrected. The electronic device 1 according to an embodiment may use information that has been adjusted by correcting the point cloud information from the sensor 100 and the image information from the imaging unit 300.

We assume that the detection range (angle) of a point cloud by the sensor 100 and the imaging range (angle or angle of view) of an image by the imaging unit 300 are not the same. In such a case, the electronic device 1 may adjust the wider range (angle) of the two to the narrower range (angle) so that the point cloud information from the sensor 100 and the image information from the imaging unit 300 positionally correspond to each other. That is, the electronic device 1 may use information only of an overlapping range between the imaging range of the imaging unit 300 and the detectable range of the sensor 100, and delete or ignore information of a non-overlapping range.

As described above, in the electronic device 1 according to an embodiment, as the information of the image obtained by the imaging unit 300 capturing an image of an object, information that positionally corresponds to the point cloud information obtained by the sensor 100 detecting the object may be used.

Hereinafter, detection of an object performed using the detection device 3 as illustrated in FIG. 4A and FIG. 4B will be described. In the detection device 3, the sensor 100 has directivity as described above, and therefore has a main lobe (main beam) in the direction of the optical axis Ra illustrated in FIG. 4B. That is, the sensor 100 according to an embodiment has the strongest radiation level in the direction of the optical axis Ra. In this case, the sensor 100 can output a point cloud representing a detected object by radiating a transmission wave having directivity and receiving the resulting reflection wave. Here, the sensor 100 that performs such detection has a characteristic that the sensor 100 is most likely to detect the point cloud of an object in the direction of the optical axis Ra illustrated in FIG. 4B, i.e., in front of the sensor 100. Therefore, even if two objects having the same reflection characteristics are present at the same distance from the sensor 100, the number of points of a point cloud output in detection will be different for an object located in front of the sensor 100 and an object located somewhere other than in front of the sensor 100.

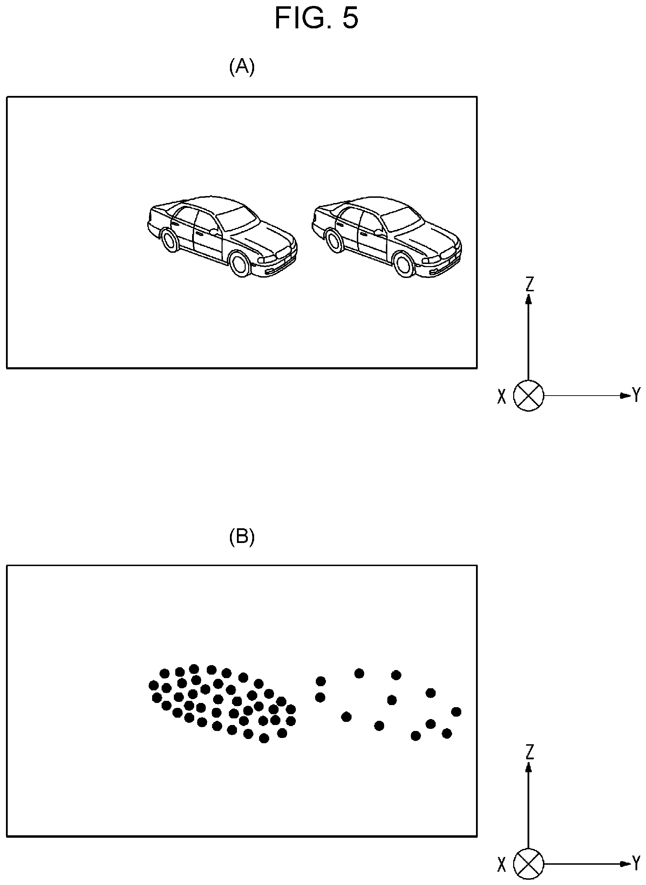

FIGs. 5A and 5B are diagrams illustrating an example in which the number of points of a point cloud output by the sensor 100 differs depending on the position relative to the front of the sensor 100 due to the directivity of the sensor 100.

For example, as illustrated in FIG. 5A, one car is located almost exactly in front of the detection device 3, and another car is located slightly to the right of the front of the detection device 3. Here, both of the two cars may be located at almost the same distance from the sensor 100. Furthermore, both of the two cars may have almost the same reflection characteristics. FIG. 5A may be an image of two thus-disposed cars captured by the imaging unit 300 illustrated in FIGs. 4A and 4B. In this case, in the image captured by the imaging unit 300, as illustrated in FIG. 5A, one car is located almost exactly in the center of the image, and the other car is located slightly to the right of the center of the image.

FIG. 5B illustrates an example of point clouds output by the sensor 100 in the situation as illustrated in FIG. 5A. As illustrated in FIG. 5B, the car located in the center is detected as a point cloud made up of a relatively larger number of points (point cloud density is relatively high). On the other hand, the car located slightly to the right of the center is detected as a point cloud made up of a relatively smaller number of points (point cloud density is relatively low). Thus, the detection accuracy for an object located at a position other than in front of the sensor 100 may be lower than that for an object located in front of the sensor 100. In other words, the detection results (detected point cloud information) for two objects located at approximately the same distance from the sensor 100 and having the same reflection characteristics may differ to a considerable extent. If such point cloud information is used as input data for machine learning performed by AI, for example, appropriate machine learning may be difficult.

Accordingly, the electronic device 1 according to an embodiment may adjust the signal strength of a reception signal, which is based on a reflection wave generated by a transmission wave transmitted from the sensor 100 being reflected by an object, in accordance with the directivity of at least one of the transmission wave or the reflection wave. As described above, an object located in the center as viewed from the sensor 100 is detected as a point cloud consisting of relatively large number of points (point cloud density is relatively high). In other words, the strength of detection by the sensor 100 for an object located in the center as viewed from the sensor 100 is relatively high. On the other hand, an object located away from the center as viewed from the sensor 100 is detected as a point cloud made up of a relatively small number of points (point cloud density is relatively low). In other words, the strength of detection by the sensor 100 is relatively low for an object located away from the center as viewed from the sensor 100. Therefore, the electronic device 1 according to an embodiment may perform adjustment so that the strength of detection by the sensor 100 is higher for an object located away from the center as viewed from the sensor 100. More specifically, the signal strength of a reception signal based on a reflection wave reflected by an object may be adjusted so that the signal strength is increased for an object located further away from the center as viewed from the sensor 100. In addition, the signal strength of a reception signal based on a reflection wave reflected by an object may be adjusted so that the signal strength is reduced for an object located closer to the center as viewed from the sensor 100.

As described above, the electronic device 1 according to an embodiment includes the controller 10 that detects an object based on a transmission signal transmitted as a transmission wave and a reception signal received as a reflection wave generated by the transmission wave being reflected by an object. Here, the controller 10 may adjust the signal strength of the reception signal in accordance with the directivity of at least one of the transmission wave or the reflection wave. More specifically, the controller 10 may adjust the signal strength of the reception signal so that the weaker the radiation intensity of at least one of the transmission wave or the reflection wave, the stronger the signal strength of the reception signal. Adjustment of the signal strength of the reception signal carried out by the electronic device 1 according to an embodiment will be described later.

Next, operation of the electronic device 1 according to an embodiment will be described. As described above, the electronic device 1 according to an embodiment may carry out object detection by adjusting the signal strength of the reception signal so that the weaker the radiation intensity of at least one of the transmission wave or the reflection wave, the stronger the signal strength of the reception signal. In addition, the electronic device 1 according to an embodiment may perform machine learning after adjusting the signal strength of point cloud data obtained as a result of detecting objects present at various positions, and thereby detect various objects and/or identify the detected objects. Hereinafter, machine learning for detecting objects carried out by the electronic device 1 according to an embodiment will be described.

The operation of performing machine learning carried out by the electronic device 1 according to an embodiment can typically be divided into a "learning phase" and an "inference phase". The learning phase of the present disclosure may include, for example, a training phase in which parameters used in processing for outputting results are generated. In the learning phase, for example, when an object is present at a predetermined position as viewed from the sensor 100, machine learning may be performed by providing correct answer data (training data) for point cloud data detected from the object, including the signal strength of the reception signal adjusted according to the position. In the inference phase, an operation of detecting the presence or absence of an object and/or an operation of identifying the detected object may be performed using the results of the machine learning performed in the learning phase. The "learning phase" and the "inference phase" of the machine learning performed by the electronic device 1 according to an embodiment will be described below.

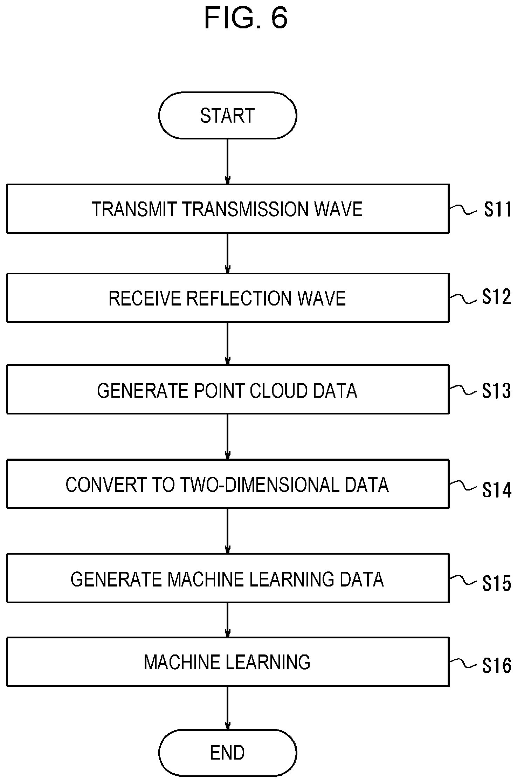

FIG. 6 is a flowchart for explaining the operation of the learning phase performed by the electronic device 1 according to an embodiment. The flow of the operation performed by the electronic device 1 will be briefly described below. The operation illustrated in FIG. 5 may be started when the electronic device 1 detects an object present around the electronic device 1.

When the operation of the learning phase illustrated in FIG. 6 starts, the radar controller 110 of the sensor 100 connected to the electronic device 1 performs control to transmit a transmission wave from the transmission antenna 125 of the sensor 100 (Step S11).

When the transmission wave is transmitted in Step S11, the radar controller 110 performs control so that a reflection wave generated by the transmission wave being reflected by an object is received from the reception antenna 131 of the sensor 100 (Step S12).

When the reflection wave is received in Step S12, the radar controller 110 performs predetermined signal processing on a beat signal based on the transmission wave and the reflection wave, and generates point cloud information (point cloud data) based on the detection of the object (Step S13). In Step S13, the radar controller 110 may perform at least any one of the above-mentioned types of signal processing, such as distance FFT processing, velocity FFT processing, detection processing based on a constant false alarm probability (CFAR), and predetermined clustering processing. In Step S13, the radar controller 110 may execute any processing for generating point cloud data based on object detection, not limited to the above-mentioned signal processing. For example, in technologies such as millimeter wave radar, various processing for generating point cloud data based on object detection are known, and therefore detailed description thereof is omitted.

In Step S13, the radar controller 110 may generate point cloud data as illustrated in FIG. 5B as point cloud data corresponding to the objects (two automobiles in this case) illustrated in FIG. 4A. As described above, the sensor 100 outputs point cloud data based on object detection. The point cloud data output from the sensor 100 in this way may be input to the controller 10 of the electronic device 1.

The point cloud data generated in Step S13 is information representing the three-dimensional position of the detected object in a three-dimensional space. Therefore, the controller 10 of the electronic device 1 converts the three-dimensional point cloud data generated in Step S13 into two-dimensional data (Step S14). In Step S14, the controller 10 may generate point cloud information that can be processed two-dimensionally from the point cloud information in the three-dimensional space output by the sensor 100.

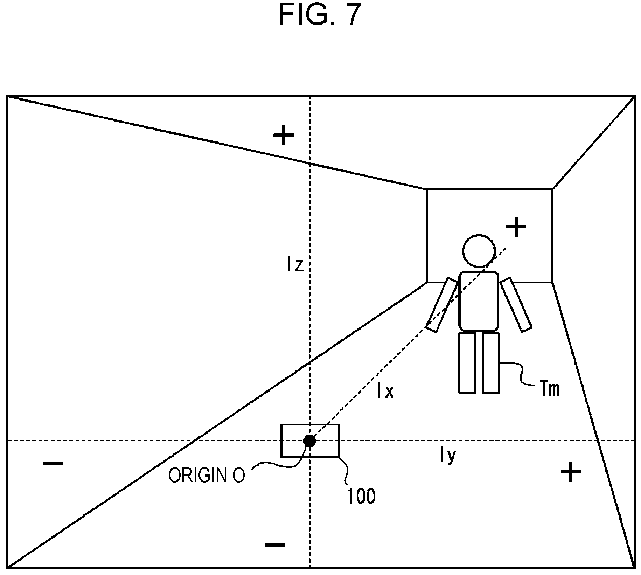

FIG. 7 is a diagram for explaining the point cloud information in the three-dimensional space output by the sensor 100. FIG. 7 is a diagram illustrating an example of a situation in which an object (in this case, a human being) Tm located at a certain location is three-dimensionally detected by the sensor 100 installed at an origin O.

As illustrated in FIG. 7, using the position where the sensor 100 is installed as a reference (origin O), a direction toward the object Tm is taken as a positive X-axis direction and a direction away from the object Tm is taken as a negative X-axis direction. Furthermore, as illustrated in FIG. 7, using the position where the sensor 100 is installed as a reference (origin O), the side to the right of the sensor 100 corresponds to a positive Y-axis direction and the side to the left of the sensor 100 corresponds to a negative Y-axis direction. Furthermore, as illustrated in FIG. 7, using the position where the sensor 100 is installed as a reference (origin O), the side above the sensor 100 corresponds to a positive Z-axis direction and the side below the sensor 100 corresponds to a negative Z-axis direction. That is, in FIG. 7, lx indicates a distance in the depth direction, ly indicates a distance in the horizontal direction, and lz indicates a distance in the vertical (height) direction. In the situation illustrated in FIG. 7, the output of the sensor 100 may be four-channel data of data elements (signal strength and velocity) of a position (X, Y, Z) in a three-dimensional space at a certain moment. In Step S14 illustrated in FIG. 6, the controller 10 converts the information detected in such a three-dimensional space into two-dimensional information.

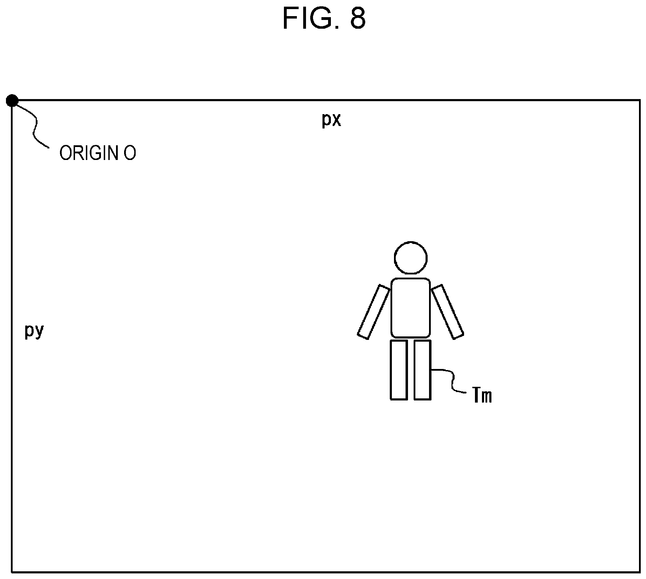

FIG. 8 is a diagram for explaining an example of generating point cloud information that can be processed two-dimensionally from point cloud information in a three-dimensional space output by the sensor 100. FIG. 8 is a diagram illustrating an example in which an object (in this case, a human being) Tm located at a certain location is detected three-dimensionally (spatially) by the sensor 100 installed at an origin O, and then converted into two-dimensional (planar) data by the electronic device 1.

As illustrated in FIG. 8, using the position of the origin O as a reference, the side to the right of the origin O corresponds to a positive X-axis direction, and the side below the origin O corresponds to a positive Y-axis direction. That is, in FIG. 8, px indicates the horizontal-direction coordinate, and py indicates the vertical-direction coordinate. In the situation illustrated in FIG. 8, the output of the sensor 100 is converted from the above-mentioned four-channel data at a certain moment into three-channel data of data elements (signal strength and velocity) of a position (X, Y) on a two-dimensional plane. In this way, in Step S14 illustrated in FIG. 6, the electronic device 1 converts information detected in a three-dimensional space into information on a two-dimensional plane.

When converting the information detected in the three-dimensional space into information on a two-dimensional plane as described above, the coordinates on the two-dimensional plane may be calculated, for example, based on the following Formulas (1) and (2).

[Math 1]

$$px_i = \frac{ly_i \times (M-1)}{lx_i \times 2 \times \tan\frac{\alpha x}{2}} + \frac{M-1}{2} \quad (1)$$

[Math 2]

$$py_i = -\frac{lz_i \times (N-1)}{lx_i \times 2 \times \tan\frac{\alpha y}{2}} + \frac{N-1}{2} \quad (2)$$

In the above Formulas (1) and (2), $lx_i$, $ly_i$, and $lz_i$ indicate the output based on the results of detection performed by the sensor 100, that is, the point cloud information in the three-dimensional space. In particular, $lx_i$ indicates the distance in the x direction of an i-th piece of information detected by the sensor 100. Furthermore, $ly_i$ indicates the distance in the y direction of the i-th piece of information detected by the sensor 100. In addition, $lz_i$ indicates the distance in the z direction of the i-th piece of information detected by the sensor 100.

Furthermore, in the above Formula (1) and Formula (2), $px_i$ and $py_i$ indicate the coordinates of a point cloud converted into two-dimensional plane information by the controller 10 of the electronic device 1. In particular, $px_i$ indicates the x coordinate of the i-th piece of information detected by the sensor 100. In addition, $py_i$ indicates the y coordinate of the i-th piece of information detected by the sensor 100.

Furthermore, in the above Formula (1), M indicates the number of pixels in the horizontal direction when a two-dimensional planar image is assumed, and $\alpha x$ indicates a horizontal angle of view when a two-dimensional planar image is assumed. Furthermore, in the above Formula (2), N indicates the number of pixels in the vertical direction when a two-dimensional planar image is assumed, and $\alpha y$ indicates a vertical angle of view when a two-dimensional planar image is assumed.

In the above Formulas (1) and (2), $px_i$ and $py_i$ may be rounded off to the nearest whole number so as to function as coordinate values. In addition, in the above Formulas (1) and (2), data that does not satisfy, for example, $0 \leq px_i \leq M$ or $0 \leq py_i \leq N$ may be discarded so that $px_i$ and $py_i$ fit within the size of the image after conversion to a two-dimensional plane.

In this way, the electronic device 1 according to an embodiment may generate two-dimensionally processable point cloud information from the output of the sensor 100. In particular, the electronic device 1 according to an embodiment may convert the point cloud information detected by the sensor 100 into two-dimensionally processable point cloud information based on at least one of a predetermined number of pixels or a predetermined angle of view in a two-dimensional image. The electronic device 1 according to an embodiment may generate two-dimensionally processable point cloud information from the output of the sensor 100 based on conversion formulas other than the above Formulas (1) and (2).

In the electronic device 1 according to an embodiment, the point cloud information in Step S13 is reduced in terms of dimensions in Step S14, and therefore, for example, the amount of calculation performed by the controller 10 can be significantly reduced. Therefore, in the electronic device 1 according to an embodiment, for example, the processing load of the controller 10 can be reduced. Each point constituting the two-dimensional point cloud data generated in Step S14 may include three-channel information of reflection intensity, distance, and velocity at that point.

When the point cloud data is two-dimensionalized in Step S14, the controller 10 generates data to be used for machine learning based on the two-dimensional point cloud data (Step S15). As described above, the density of the point cloud output from the sensor 100 as a result of detection of an object by the sensor 100 may differ depending on the direction of the object relative to the sensor 100. Therefore, in Step S15, the controller 10 may adjust the signal strength of a reception signal, which is based on a reflection wave generated when a transmission wave transmitted from the sensor 100 is reflected by an object, in accordance with the directivity of at least one of the transmission wave or the reflection wave. Here, the sensor 100 has directivity and has a main lobe (main beam) directed straight ahead in the center when seen from the sensor 100. In this case, the controller 10 may adjust the detection strength of an object by the sensor 100 so that the detection strength is increased the farther the object is located from the center as seen from the sensor 100.

In an embodiment, the electronic device 1 may store specified values for adjusting the signal strength of the reception signal in accordance with the directivity of the sensor 100 in the storage unit 20, for example. In this case, the electronic device 1 may store, for example, values for adjusting the signal strength of the reception signal in accordance with the directivity of the sensor 100 in a map.

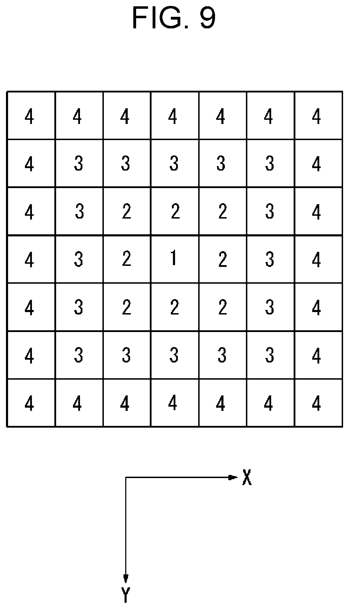

For example, as illustrated in FIG. 9, the electronic device 1 may map a two-dimensional array of values for adjusting the signal strength of the reception signal in the detection range of the sensor 100. In the example illustrated in FIG. 9, since the signal strength of the reception signal is highest in a front center part of the detection range of the sensor 100, the adjustment value of the reception signal may be set to 1 (for example, times one). In the example illustrated in FIG. 9, the signal strength of the reception signal decreases as one moves slightly away from the front center part of the detection range of the sensor 100, and therefore the adjustment value of the reception signal may be set to 2 (e.g., two times). In this way, the signal strength of the reception signal decreases as the distance from the front center part of the detection range of the sensor 100 increases. Therefore, the adjustment value of the reception signal may be increased (e.g., three times, four times, etc.) as the distance from the front center part of the detection range of the sensor 100 increases. Here, the distance from the front center part of the detection range of the sensor 100 may be, for example, a Euclidean distance or Manhattan distance. The map illustrated in FIG. 9 may correspond to, for example, the two-dimensional (planar) area illustrated in FIG. 8. An arrangement map of the present disclosure is not limited to the example illustrated in FIG. 9, and may be, for example, a map in which the adjustment values change in the form of concentric circles, a map in which the adjustment values are disposed in a triangular or other polygonal pattern, or a combination of these forms.

In this way, in an embodiment, the controller 10 may adjust the signal strength of the reception signal so that the signal strength increases as the distance from the position where the radiation intensity of at least one of the transmission wave or the reflection wave is strongest increases. In addition, in the present disclosure, the adjustment value of the reception signal may be a combination of a decimal value, a fractional value, a negative value, or 0, in addition to a positive integer. The adjustment values of the map of the present disclosure may take the form of a distribution that reflects one or more side lobes or nulls resulting from the intensity distribution of the transmission wave or the reception wave.

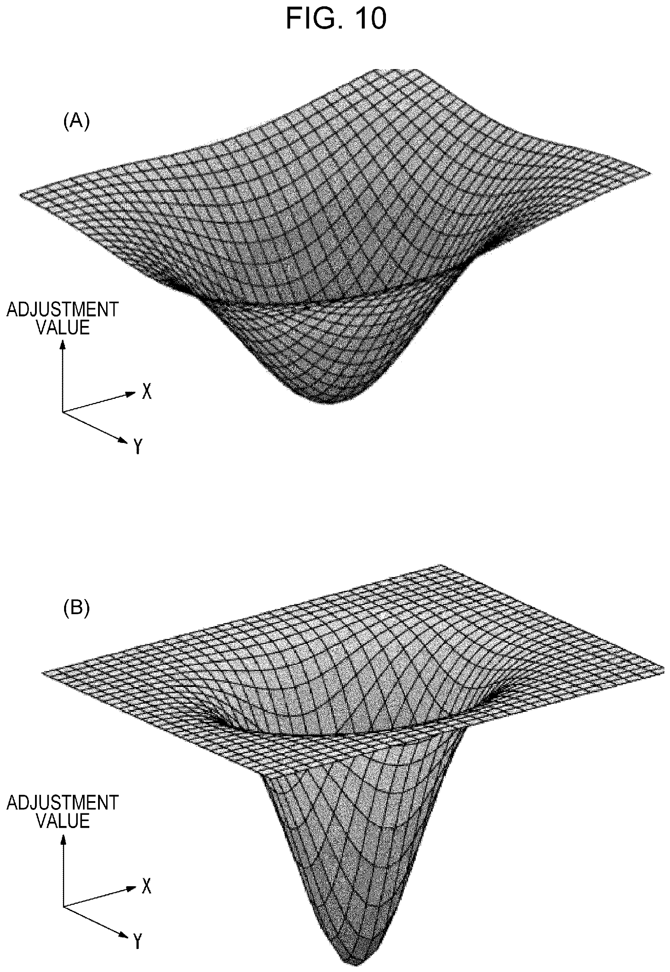

In addition, as illustrated in FIG. 10A or FIG. 10B, for example, the electronic device 1 may map the values for adjusting the signal strength of the reception signal in the detection range of the sensor 100 based on a two-dimensional Gaussian distribution. Here, the two-dimensional Gaussian distribution may be multiplied by a constant proportional to the gain of the antenna. In both FIG. 10A and FIG. 10B, a plane parallel to the XY plane is illustrated as the detection range of the sensor 100, and the adjustment values of the reception signal are illustrated by an axis perpendicular to the XY plane.

In the maps illustrated in FIG. 10A and FIG. 10B, the adjustment value of the reception signal is set to be lowest in the front center part of the detection range of the sensor 100, as in the map illustrated in FIG. 9. In addition, in the maps illustrated in FIG. 10A and FIG. 10B, the adjustment value of the reception signal is set to increase with increasing distance from the front center part of the detection range of the sensor 100, as in the map illustrated in FIG. 9. FIG. 10A may be a map illustrating values for adjusting the signal strength of the reception signal when a low-gain antenna with relatively low directivity is used. On the other hand, FIG. 10B may be a map illustrating values for adjusting the signal strength of the reception signal when a high-gain antenna with relatively high directivity is used.

The two-dimensional Gaussian distribution as illustrated in FIG. 10A or FIG. 10B may be calculated, for example, as illustrated in the following Formula (3). Formula (3) illustrates the Gaussian distribution of a variable n.
[Math 3]

$$f(x) = \frac{1}{(\sqrt{2\pi})^n \sqrt{|\Sigma|}} \exp\left( -\frac{1}{2}(x-\mu)^{\mathrm{T}} \Sigma^{-1}(x-\mu) \right) \quad (3)$$

In the above Formula (3), $\Sigma = (\sigma_{ij})$ represents a positive definite symmetric matrix called a variance-covariance

matrix. In addition, $|\Sigma|$ represents the determinant of $\Sigma$.

Based on the above Formula (3), when an adjustment value G of the reception signal based on the antenna directivity is reflected for two variables (x, y), the following Formula (4) is obtained.

[Math 4]

$$f(x, y, G) = \frac{-1}{\sqrt{2\pi\left(\sigma_x\frac{1}{G}\right)^2}\sqrt{2\pi\left(\sigma_y\frac{1}{G}\right)^2}}\exp\left\{-\frac{(x-\mu_x)^2}{2\left(\sigma_x\frac{1}{G}\right)^2}-\frac{(x-\mu_y)^2}{2\left(\sigma_y\frac{1}{G}\right)^2}\right\} \quad (4)$$

In the above Formula (4), $\mu_x = \mu_y = 0$ may be used. In addition, $\sigma_x$ and $\sigma_y$ may be constants. Furthermore, the coordinates of the center position of the sensor 100 may be (x, y) = (0, 0). In addition, G may be a variable reflecting the antenna gain. Here, G may be, for example, a variable reflecting reception antenna gain, or a variable reflecting transmission antenna gain and reception antenna gain.

Thus, in an embodiment, the controller 10 may adjust the signal strength of the reception signal based on a two-dimensional Gaussian distribution multiplied by a constant proportional to the gain of at least one of the transmission wave or the reflection wave.

In Step S14 illustrated in FIG. 6, the controller 10 may generate three-channel information of reflection intensity, distance, and velocity at each point constituting the point cloud data. In this case, in Step S15 illustrated in FIG. 6, the controller 10 may generate four-channel data by adding one channel of information of a value (map) for adjusting the signal strength of the reception signal at each point to the three-channel information.

Once the machine learning data has been generated in Step S15, the controller 10 may execute machine learning by inputting the machine learning data to an AI (e.g., a neural network) (Step S16). The machine learning performed in Step S16 may use four-channel data obtained by adding one channel of information of values (map) for adjusting the signal strength of the reception signal to the three-channel information of the reflection intensity, distance, and velocity as learning data. The machine learning performed in Step S16 may use data indicating the position of the object used to generate the four-channel data as training data (correct answer data). For example, when machine learning is performed in Step S16 using four-channel data of a point cloud as illustrated in FIG. 5B as learning data, the position (coordinates) of the object as illustrated in FIG. 5A may be used as training data (correct answer data) in Step S16.

The reflection intensity information included in the three-channel information generated in Step S14 may be adjusted in advance based on a value (map) for adjusting the signal strength of the reception signal at each point. In this case, in Step S15 illustrated in FIG. 6, the controller 10 may generate three-channel information of reflection intensity (adjusted), distance, and velocity at each point constituting the point cloud data. Then, in Step S16, the controller 10 may perform machine learning using the three-channel data of the point cloud as learning data and the position (coordinates) of the object as training data (correct answer data).

In this way, in an embodiment, the controller 10 may perform machine learning. This machine learning may be performed based on, for example, the following information.

(1) Point cloud information obtained by detecting a first object based on a transmission signal transmitted from the sensor 100 and a reception signal received as a reflection wave generated as a result of the transmission wave transmitted from the sensor 100 being reflected by the first object

(2) Signal strength of the reception signal adjusted in accordance with the directivity of at least one of the transmission wave or the reflection wave at each position in the obtained point cloud

(3) Correct answer information of the position of the first object

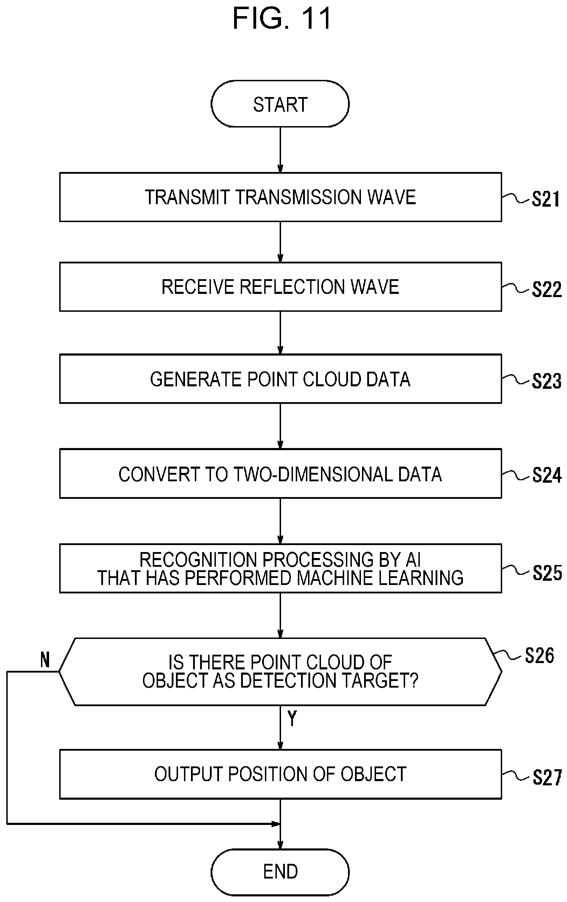

FIG. 11 is a flowchart for explaining the operation of the learning phase performed by the electronic device 1 according to an embodiment. The flow of the operation performed by the electronic device 1 will be briefly described below. The operation illustrated in FIG. 11 may be started when the electronic device 1 detects an object present around the electronic device 1.

The operations from Step S21 to Step S24 illustrated in FIG. 11 can be performed in the same or a similar manner to the operations from Step S11 to Step S14 described in FIG. 6. Therefore, detailed description thereof is omitted.

Once the point cloud data has been converted to two dimensions in Step S24, the two-dimensional point cloud data is input to the AI (e.g., neural network) that performed machine learning in FIG. 6, and the controller 10 performs processing to recognize a predetermined object (Step S25). If the controller 10 determined that there is a point cloud of an object to be detected in Step S26, the controller 10 outputs the position of the detected object (Step S27). On the other hand, if the controller 10 determined that there is no point cloud of an object to be detected in Step S26, the controller 10 does not output the position of the detected object and ends the operation illustrated in FIG. 11.

In this way, in an embodiment, the controller 10 may perform object detection based on the results of machine learning. This object detection may be performed, for example, based on the following information.

(1) Point cloud information obtained by detecting a second object based on a transmission signal transmitted from the sensor 100 and a reception signal received as a reflection wave generated as a result of the transmission wave transmitted from the sensor 100 being reflected by the second object
(2) Signal strength of the reception signal adjusted in accordance with the directivity of at least one of the transmission wave or the reflection wave at each position in the obtained point cloud
(3) Result of machine learning performed in Step S26 in FIG. 6

In an embodiment, the controller 10 may infer the position of the second object based on the above information.
As described above, according to the electronic device 1 of an embodiment, even if object detection is performed using radio waves having directivity using a sensor such as a millimeter wave radar, variations in detection strength due to the direction of the object relative to the sensor can be reduced. Therefore, according to the electronic device 1 of an embodiment, the influence on the detection accuracy of an object depending on the direction relative to the sensor such as a millimeter wave radar can be reduced. Therefore, according to the electronic device 1 of an embodiment, the accuracy of object detection by a sensor with directivity can be improved.
Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps. Although embodiments of the present disclosure have been described while focusing on devices, the embodiments of the present disclosure can also be realized as a method including steps executed by individual component of the device. The embodiments of the present disclosure can also be realized as a method executed by a processor included in a device, a program, or a storage medium recording the program. Please understand that the scope of the present disclosure also includes these forms.
The above-described embodiment is not limited to only being implemented as the electronic device 1. For example, the above-described embodiment may be implemented as the electronic device 1 included in the electronic device 1. In addition, the above-described embodiment may be implemented as a monitoring method performed by a device such as the electronic device 1. Furthermore, the above-described embodiment may be implemented, for example, as a program executed by a device such as the electronic device 1 or an information processing apparatus (for example, a computer), or may be implemented as a storage medium or recording medium on which such a program is recorded.

REFERENCE SIGNS

| | |
|---|---|
| 1 | electronic device |
| 3 | detection device |
| 5 | stand part |
| 7 | ground part |
| 10 | controller |
| 20 | storage unit |
| 30 | communication unit |
| 40 | display |
| 50 | notification unit |
| 100 | sensor |
| 101 | radio wave input unit |
| 110 | radar controller |
| 120 | transmission unit |
| 121 | signal generating unit |
| 122 | synthesizer |
| 123 | phase controller |
| 124 | amplifier |
| 125 | transmission antenna |
| 130 | reception unit |
| 131 | reception antenna |

132    LNA
133    mixer
134    IF unit
135    AD converter
300    imaging unit
301    optical input unit

**Claims**

1.  An electronic device comprising:

    a controller configured to detect an object based on a transmission signal transmitted as a transmission wave and a reception signal received as a reflection wave generated by the transmission wave being reflected by the object, wherein the controller adjusts a signal strength of the reception signal in accordance with a directivity of at least one of the transmission wave or the reflection wave.

2.  The electronic device according to claim 1, wherein the controller adjusts the signal strength of the reception signal so that the signal strength of the reception signal becomes stronger as a radiation intensity of at least one of the transmission wave or the reflection wave becomes weaker.

3.  The electronic device according to claim 1, wherein the controller adjusts the signal strength of the reception signal so that the signal strength becomes stronger with increasing distance from a position where a radiation intensity of at least one of the transmission wave or the reflection wave is strongest.

4.  The electronic device according to claim 1, wherein the controller adjusts the signal strength of the reception signal based on a two-dimensional Gaussian distribution multiplied by a constant proportional to a gain of at least one of the transmission wave or the reflection wave.

5.  The electronic device according to any one of claims 1 to 4, wherein the object is detected based on a transmission signal transmitted by a transmission antenna array as the transmission wave and/or a reception signal received by a reception antenna array as the reflection wave.

6.  The electronic device according to claim 1,

    wherein the controller performs machine learning based on
    information on a point cloud obtained by detecting a first object based on the transmission signal and a reception signal received as a reflection wave generated by the transmission wave being reflected by the first object,
    a signal strength of the reception signal adjusted in accordance with the directivity of at least one of the transmission wave or the reflection wave at each position in the point cloud, and
    correct answer information of a position of the first object.

7.  The electronic device according to claim 6,

    wherein the controller infers a position of a second object based on
    information on a point cloud obtained by detecting the second object based on the transmission signal and a reception signal received as a reflection wave generated by the transmission wave being reflected by the second object,
    a signal strength of the reception signal adjusted in accordance with the directivity of at least one of the transmission wave or the reflection wave at each position in the point cloud, and
    a result of the machine learning.

8.  A method for controlling an electronic device, comprising:

    detecting an object based on a transmission signal transmitted as a transmission wave and a reception signal received as a reflection wave generated by the transmission wave being reflected by the object; and
    adjusting a signal strength of the reception signal in accordance with a directivity of at least one of the transmission wave or the reflection wave.

9. A program for causing a computer to execute:

detecting an object based on a transmission signal transmitted as a transmission wave and a reception signal received as a reflection wave generated by the transmission wave being reflected by the object; and adjusting a signal strength of the reception signal in accordance with a directivity of at least one of the transmission wave or the reflection wave.

FIG. 1

# FIG. 2

FIG. 3

## FIG. 4

(A)

(B)

# FIG. 5

(A)

(B)

# FIG. 6

```
          ┌─────────────┐
          │    START    │
          └─────────────┘
                 │
                 ▼
  ┌───────────────────────────────────┐
  │    TRANSMIT TRANSMISSION WAVE      │ ～ S11
  └───────────────────────────────────┘
                 │
                 ▼
  ┌───────────────────────────────────┐
  │      RECEIVE REFLECTION WAVE       │ ～ S12
  └───────────────────────────────────┘
                 │
                 ▼
  ┌───────────────────────────────────┐
  │     GENERATE POINT CLOUD DATA      │ ～ S13
  └───────────────────────────────────┘
                 │
                 ▼
  ┌───────────────────────────────────┐
  │    CONVERT TO TWO-DIMENSIONAL DATA │ ～ S14
  └───────────────────────────────────┘
                 │
                 ▼
  ┌───────────────────────────────────┐
  │   GENERATE MACHINE LEARNING DATA   │ ～ S15
  └───────────────────────────────────┘
                 │
                 ▼
  ┌───────────────────────────────────┐
  │         MACHINE LEARNING           │ ～ S16
  └───────────────────────────────────┘
                 │
                 ▼
          ┌─────────────┐
          │     END     │
          └─────────────┘
```

# FIG. 7

# FIG. 8

# FIG. 9

| 4 | 4 | 4 | 4 | 4 | 4 | 4 |
|---|---|---|---|---|---|---|
| 4 | 3 | 3 | 3 | 3 | 3 | 4 |
| 4 | 3 | 2 | 2 | 2 | 3 | 4 |
| 4 | 3 | 2 | 1 | 2 | 3 | 4 |
| 4 | 3 | 2 | 2 | 2 | 3 | 4 |
| 4 | 3 | 3 | 3 | 3 | 3 | 4 |
| 4 | 4 | 4 | 4 | 4 | 4 | 4 |

X →

↓ Y

# FIG. 10

(A)

ADJUSTMENT
VALUE

X

Y

(B)

ADJUSTMENT
VALUE

X

Y

# FIG. 11

START

TRANSMIT TRANSMISSION WAVE — S21

RECEIVE REFLECTION WAVE — S22

GENERATE POINT CLOUD DATA — S23

CONVERT TO TWO-DIMENSIONAL DATA — S24

RECOGNITION PROCESSING BY AI
THAT HAS PERFORMED MACHINE LEARNING — S25

IS THERE POINT CLOUD OF
OBJECT AS DETECTION TARGET? — S26

N

Y

OUTPUT POSITION OF OBJECT — S27

END

## EP 4 614 183 A1

# INTERNATIONAL SEARCH REPORT

| | International application No. |
|---|---|
| | **PCT/JP2023/039509** |

**A.    CLASSIFICATION OF SUBJECT MATTER**

*G01S 7/35*(2006.01)i; *G01S 13/86*(2006.01)i; *G01S 13/89*(2006.01)i; *G01V 3/12*(2006.01)i
FI:    G01S7/35; G01S13/86; G01S13/89; G01V3/12 A

According to International Patent Classification (IPC) or to both national classification and IPC

**B.    FIELDS SEARCHED**

Minimum documentation searched (classification system followed by classification symbols)

G01S7/00 - 7/42, G01S13/00 - 13/95, G01S7/48 - 7/51, G01S17/00 - 17/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-137447 A (JAPAN RADIO CO LTD) 19 July 2012 (2012-07-19) paragraphs [0015]-[0040], fig. 1-13 | 1, 5, 8-9 |
| Y | | 2-4 |
| A | | 6-7 |
| Y | JP 2022-130177 A (KYOCERA CORP) 06 September 2022 (2022-09-06) paragraphs [0089]-[0097], [0133]-[0136] | 2-4 |
| A | | 6-7 |
| A | US 2022/0099817 A1 (AURORA INNOVATION, INC.) 31 March 2022 (2022-03-31) entire text, all drawings | 1-9 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/039509**

| Patent document cited in search report | | | Publication date (day/month/year) | Patent family member(s) | | Publication date (day/month/year) |
|---|---|---|---|---|---|---|
| JP | 2012-137447 | A | 19 July 2012 | (Family: none) | | |
| JP | 2022-130177 | A | 06 September 2022 | (Family: none) | | |
| US | 2022/0099817 | A1 | 31 March 2022 | WO | 2022/072485 A1 | |

Form PCT/ISA/210 (patent family annex) (January 2015)

**EP 4 614 183 A1**

**Patent documents cited in the description**

- JP 2022176663 A

- JP 2022019047 A